# EUROPEAN PATENT SPECIFICATION

(11) **EP 3 452 863 B1**
(45) Date of publication and mention of the grant of the patent: **06.04.2022**
(21) Application number: 17720471.6
(22) Date of filing: 27.04.2017
(51) Int. Cl.: G02B 27/00, B60S 1/56, B60R 1/00, B63B 19/02

(54) **CLEANING SYSTEM FOR A CAMERA LENS**
REINIGUNGSSYSTEM FÜR EIN KAMERAOBJEKTIV
SYSTÈME DE NETTOYAGE POUR UN OBJECTIF

(30) Priority: 03.05.2016 DE 102016108247
(43) Date of publication of application: 13.03.2019
(73) Proprietor: SMR Patents S.à.r.l., 1653 Luxembourg (LU)
(72) Inventor: SLAMA, Alexander, 70374 Stuttgart (DE)
(74) Representative: Weber-Bruls, Dorothée
(86) International application number: PCT/EP2017/060104
(87) International publication number: WO 2017/191033

(56) References cited:
- WO-A2-2008/087648
- WO-A2-2008/087648
- DE-B3-102012 015 950
- JP-A- H09 212 758
- JP-A- H09 212 758
- JP-B1- 5 896 440
- JP-B1- 5 896 440
- US-A1- 2007 217 782
- US-A1- 2007 217 782
- US-A1- 2014 036 132
- US-A1- 2014 036 132
- US-B1- 6 322 258
- US-B1- 6 322 258

## Description

### FIELD OF THE INVENTION

The invention relates to a rear view display device for a vehicle, preferably a motor vehicle, comprising at least one cleaning system for a camera lens. In detail, the invention relates to a rear view display device according to claim 1 or 2. The invention also relates to a vehicle comprising such a rear view display device.

### BACKGROUND OF THE INVENTION

In modern day vehicles conventional mirrors are often replaced with camera based systems. It has been recognized that the vehicle mirrors currently used have several disadvantages. Conventional mirrors often offer the driver a very limited perspective on the environment of the vehicle. So-called "blind spots" can only be compensated through additional mirrors. Also, vehicle mirrors have a negative impact on the design and the aerodynamic characteristics of the vehicle. Therefore, vehicles often employ vision systems where the images of cameras on the left-hand side, right-hand side, the front and the back of the vehicle are presented to the driver, instead of employing conventional mirrors. For example, DE 10 2012 015 950 B3 describes a system where multiple cameras are arranged on a vehicle for capturing images of the vehicle's surroundings. For cleaning the camera lenses, DE 10 2012 015 950 B3 suggests to employ cleaning elements that are led by mechanical means over respective cover glasses that cover the camera lenses. However, the disadvantage of this prior art solution is that the view of the camera is temporarily blocked by the cleaning element. In other prior art examples, the camera needs to be even physically moved for cleaning.

In WO 2005/096091 A1 another prior art solution is presented, where a camera is located in a dome shaped cover which can be spun rapidly to dispel any extraneous matter from the lens cover. However, the solution described in WO 2005/096091 A1 requires a lot of installation space, is rather complex, and does not work with ingrained dirt.

Also, all solutions that are known from the prior art have in common that they do not provide a universal solution for cleaning the cameras of a system that employs multiple cameras, such as, for example, a narrow angle and a "fish eye" camera.

US 2014/036132 A1 discloses a rear view display device for a vehicle and it specifically refers to a lens cleaning device having a housing. A cylindrical lens is disposed inside the housing and defines an inner cavity. An imager is disposed in the cavity. A gear assembly operably couples the cylindrical lens with a motor. The motor is operational to rotate the gear assembly and consequently the cylindrical lens. The lens apparatus may be used in outdoor and mobile applications, such as on a vehicle.

A cleaning assembly for an optical device such as a TV camera is known from WO 2008/087648 A2 and includes a shaft configured for supporting the optical device within an enclosure that is adapted for rotation about the shaft. At least one first sealing element is disposed between the shaft and a mating surface of the enclosure for preventing fluid leakage there through. At least one optically transparent window is mounted in association with the enclosure, and at least one cleaning element is coupled to the shaft for cleaning a surface of the window. The cleaning assembly may include a moisture barrier in the form of a pressure-influenced member such as a bellows having a body of expandable and retractable- volume for containing air that diffuses therein, while equalizing pressure on opposite sides of the barrier. JP 5 896 440 B1 provides a wiper device for optical equipment e.g. mounted to an on-vehicle camera. The wiper device comprises optical equipment having a photoelectric sensor, a cover glass enclosing the optical equipment, and a housing enclosing the cover glass, and cleans a surface of the cover glass by rotating the housing and cover glass relatively comprises a driving unit M which rotates the cover glass and housing relatively. The housing is provided with an opening part for imaging at a place corresponding to the optical axis of the photoelectric sensor, and a seal ring coming into slide contact with the cover glass is mounted on a peripheral edge of the opening part of the housing. Further, a wiper ring coming into slide contact with the cover glass is mounted at a place different from the opening part of the housing, and a cleaning liquid for cleaning the surface of the cover glass is supplied to the place of the wiper ring.

The object of the present invention is to further develop the known rear view display device for a vehicle according to the preamble of claim 1 or 2 to overcome the drawbacks of the prior art. Therefore, the invention aims at providing a rear view display device with an improved and robust cleaning system that overcomes the above mentioned disadvantages. In particular, the invention aims to provide a solution that requires less parts, and allows continuous recording, while providing high quality images.

### SUMMARY OF THE INVENTION

The object of the present invention is achieved with the characterizing features of either claim 1 or 2.

Here, the term "cover" can be used to refer to a protective enclosure that comprises at least one cavity for at least partially enclosing one camera. The term "rotationally move" can be used to refer to a situation where the cover is horizontally, vertically, and/or diagonally moved relative to the camera, or to the lens of the camera, while the camera is kept in an essentially fixed spatial position. The term "at least partially encloses the cover" can be used to refer to a mounting situation where at least parts of the cover are held and located inside the housing. For example, most of the surface of the cover could be located inside the housing. The term "electromagnetic radiation" can be used to refer to radiant energy, such as visible light, etc.

In one embodiment, the cover comprises essentially transparent and/or essentially scratch-proof material, preferably the cover comprises Gorilla-Glas^{™}.

In another embodiment, the cover fully encloses the camera, or the cover encloses at least the lens of the camera.

In another embodiment, the cover comprises a geometry that is essentially rotational symmetric. In one embodiment, the cover comprises a rectangular, cylindrical, spherical, conical, elliptical, and/or circular shape, preferably at least part of the cover comprises a convex shape, or a concave shape, preferably at least that part of the cover comprises a convex shape, or a concave shape that is adapted to be moved over the camera, and/or the camera lens.

In one embodiment, the drive means comprises a motor, preferably an electric motor, and/or a turbine, preferably a windmill, to rotationally move the cover relative to the camera by means of an air stream.

In yet another embodiment, the cleaning system comprises at least one cleaning device, wherein the cleaning device is adapted to clean an outer surface of the cover, wherein preferably the cleaning device is installed essentially perpendicularly to the cover and comprises a curvature that follows the curvature of the cover, or extends essentially along a straight line.

Here, the term "outer surface of the cover" can be used to refer to the surface of the cover that is exposed to the outside of the cover, which is located opposite the inner surface where the camera is located.

In one embodiment, the cleaning device comprises at least one brush for cleaning the outer surface of the cover, wherein preferably the brush is kept rotationally relative to the cover.

In another embodiment, the cleaning device comprises at least one lip, for cleaning the outer surface of the cover, wherein preferably the lip comprises PVC material.

In yet another embodiment, the cleaning system comprises at least one nozzle, wherein the nozzle is adapted to spray a cleaning fluid, preferably water, onto the outer surface of the cover, preferably the nozzle is adapted to spray the cleaning fluid between the outer surface of the cover and the cleaning device.

In one embodiment, the cleaning system comprises at least one fan for circulating air around the cover.

In one embodiment, the cleaning system comprises at least one heating means in thermal contact with the cover, wherein preferably the heating means comprises at least one heating coil.

According to the invention there are two cameras. That is either the two cameras are enclosed in one single cover, with one single opening within the housing, which at least partially encloses the cover, the opening being shaped so that it does not obstruct the viewing angle of either of the two cameras, and the cover being rotatable around two axes; or the cleaning system further comprises at least one auxiliary cover to at least partially enclose at least one auxiliary camera having at least one auxiliary camera lens; auxiliary drive means adapted to rotationally move the auxiliary cover relative to the auxiliary camera; and wherein the housing is adapted to hold the auxiliary cover and the auxiliary drive means, and wherein the housing comprises an auxiliary opening for allowing light to pass through the auxiliary cover to the lens of the auxiliary camera, wherein the auxiliary cover is adapted to at least partially enclose a camera having a wide aperture for surround view and the auxiliary cover is adapted to at least partially enclose an auxiliary camera having a narrow aperture for mirror replacement.

In yet another embodiment each housing can be arranged on a vehicle, in particular mounted to a side of the vehicle, at a location where traditionally a side view mirror would be mounted. Also, the invention relates to a vehicle comprising at least one rear view display device according to the invention.

It has been advantageously found that the cleaning system according to the invention provides an universal solution for any field of view camera and is applicable for more cameras in one single cover. Due to the rotational movement of the cover relative to the camera, the cover can be cleaned without blocking the field of view of the cameras that are enclosed within the cover.

Also, by using the system according to the invention, each camera does not need to be pulled back, in which case the camera would be temporarily not useable. Also, the cleaning system can better protect cameras having a sensitive optic, such as fish eye cameras, instead of cleaning/scratching on the fish eye lens with a wiper.

By employing heating means that are in thermal contact with the cover, frost and evaporation can be efficiently avoided. Advantageously, this solution makes individual heating elements in the camera body redundant.

### BRIEF DESCRIPTION OF THE DRAWINGS

The following schematic drawings show aspects of the invention for improving the understanding of the invention in connection with some exemplary illustrations, wherein
- Figures 1a, 1b: show views of a cleaning system of a rear view display device according to a first and a second embodiment;
- Figures 2a, 2b: show a schematic side view and a schematic top view of a cover and a camera according to an embodiment;
- Figures 3a, 3b: show a schematic side view and a schematic top view of a cover and a camera according to another embodiment;
- Figures 4, 5: show schematic cross-sectional views of covers and cameras according to embodiments;
- Figures 6a, 6b: show schematic views of covers and drive means according to embodiments;
- Figures 7a, 7b: show schematic views of covers and brushes according to embodiments;
- Figures 8a, 8b: show schematic views of covers and lips according to embodiments; and
- Figure 9: shows a schematic view of a camera enclosed in a cover and a fan according to another embodiment.

### DETAILED DESCRIPTION

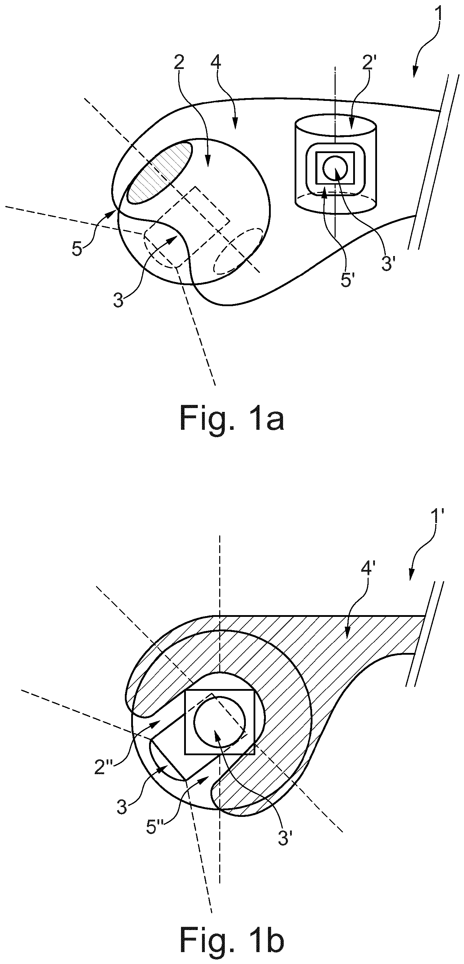

Figures 1a and 1b show cleaning systems 1, 1' of a rear view display device according to a first and a second embodiment. The cleaning systems 1, 1' comprise a housing 4, 4', wherein each housing 4, 4' can be arranged on a vehicle (not shown). The skilled person would know that the housings 4, 4' could be, for example, mounted to a side of the vehicle, at a location where traditionally a side view mirror would be mounted. However, the housings 4, 4' could be also mounted on various other locations at the front and/or at the back of the vehicle.

In Figure 1a it is shown that a cover 2 is enclosed in the housing 4. The cover 2 is rotationally held in the housing 4 so that it can rotate in the housing 4 about at least one axis that is shown by a dotted line. Drive means such as a motor (not shown) are employed for rotating the cover 2. As shown in figure 1a, the major part of the cover 2 is contained within the housing 4. The housing 4 comprises an opening 5 so that the part of the cover 2 where the lens of the camera 3 is located behind is exposed to the surroundings of the vehicle. As shown in figure 1a, the housing 4 is shaped so that it does not obstruct the viewing angle of the camera 3. In figure 1a, the viewing angle of the camera 3 is shown by dotted lines originating from the lens of the camera 3. In the shown embodiment, the cover 2 comprises transparent material so that electromagnetic radiation, for example light, can propagate through the material of the cover 2. The cover 2 encloses a camera 3 that is essentially aligned with the housing 4. During operation, the camera 3 can take images from the vehicle's surroundings, for example, to present the images to a driver inside the vehicle's cabin, or to supply the image information to a computing device for further processing. For cleaning the view of the camera 3 that might be, for example, impaired by water and/or dirt sticking to the part of the cover 2 that is exposed to the outside, the cover 2 can be rotated around the axis that is shown by the dotted line in regard to the position of the camera 3 and the housing 4. Here, a rotation of just a few degrees in any direction is sufficient to move the stained area of the cover 2 into the housing 4, and to move an unstained area of the cover 2 that was previously located inside the housing 4 in front of the lens of the camera 3.

Figure 1a further shows an auxiliary cover 2' installed in the housing 4 that encloses an auxiliary camera 3'. As shown in figure 1a, the housing 4 also comprises an auxiliary opening 5' exposing the auxiliary cover 2' to the outside of the vehicle. The auxiliary cover 2' could be operated similar to the cover 2 as described above, where the cover 2' can rotate in the housing 4 around at least one further axis that is shown by a dotted line using separate drive means (not shown).

In the embodiment that is shown in figure 1a, the camera 3 could be, for example, a camera having a wide aperture and being encased in a round or elliptical cover 2 for surround-view, while the auxiliary camera 3' could be, for example, a camera 3 having a small aperture and being encased in a round or cylindrical cover 2' for mirror replacement. Also, the skilled person would know that the cameras 3, 3' could comprise detection means for detecting movement in front of their lenses.

Figure 1b shows a cleaning system 1' according to the second embodiment, which is an embodiment of the invention, that is essentially similar to the embodiment that is shown in figure 1a. However, in the shown embodiment, two cameras 3, 3' are enclosed in one single cover 2". The cameras 3, 3' could be essentially orientated at the same angle than the cameras 3, 3' in the embodiment that is shown in figure 1a, and could also serve the same purpose. In figure 1b it is shown that one single opening 5" is shaped so that it does not obstruct the viewing angle of either of the two camera 3, 3'. The cover 2" can be rotated around two axes that are shown by dotted lines in regard to the position of the cameras 3, 3' and the housing 4'.

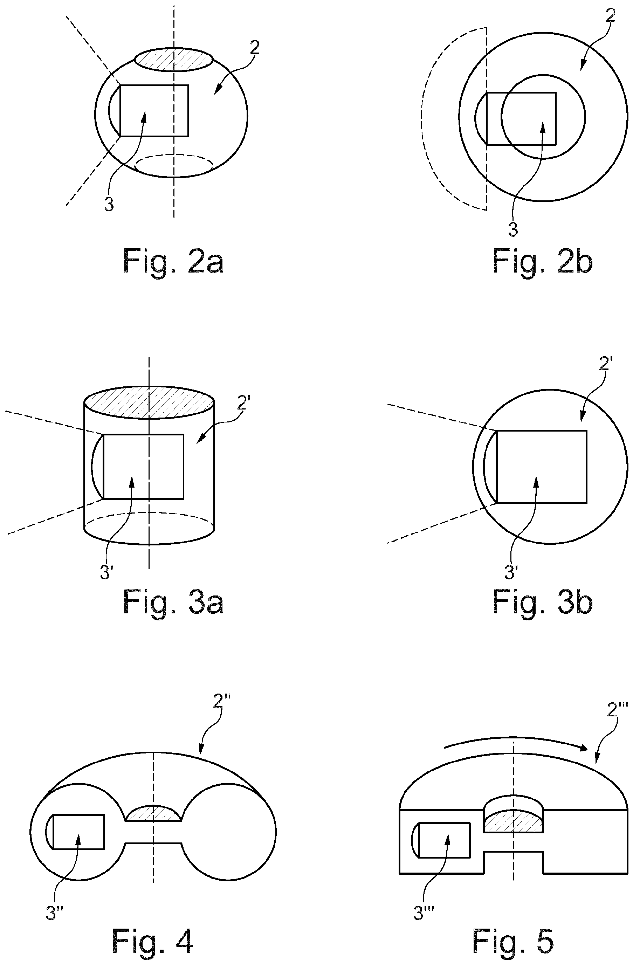

Figures 2a, 2b, 3a, 3b, 4 and 5 show schematic views of covers 2, 2′, 2ʺ, 2‴ and cameras 3, 3′, 3ʺ, 3‴ according to embodiments. The covers 2, 2′, 2ʺ, 2‴ and the respective cameras 3, 3′, 3ʺ, 3‴ could be similar to the cover 2 and the camera 3 that are shown in figure 1a. As it is shown in figures 2a, 2b, 3a, 3b, 4 and 5, the covers 2, 2′, 2ʺ, 2‴ are adapted to enclose their respective cameras 3, 3′, 3ʺ, 3‴. As described above in regard to the embodiments that are shown in figures 1a and 1b, the covers 2, 2′, 2ʺ, 2‴ could comprise transparent material so that electromagnetic radiation, such as light can propagate through the covers 2, 2′, 2ʺ, 2‴ to the cameras 3, 3′, 3ʺ, 3‴, or to their respective lenses. The skilled person would know that the covers 2, 2′, 2ʺ, 2‴ could comprise transparent material that is scratch free to withstand abrasion and mechanical impacts from the outside. In the embodiments that are shown in figures 2a, 2b, 3a, 3b, 4 and 5, the shape of the covers 2, 2′, 2ʺ, 2‴ are essentially symmetrical with rotation, and can be chosen depending on the field of sight of the enclosed cameras 3, 3′, 3ʺ, 3‴.

In figures 2a and 2b a schematic side view and a schematic top view of a cover 2 and a camera 3 according to an embodiment are shown. The cover 2 is essentially round or elliptical and comprises two opposite flat sections for rotating the cover 2 around a rotational axis (shown by a dotted vertical line). For example, this arrangement could be chosen for enclosing a so-called "Fish-Eye" camera having a wide aperture. The vertical and the horizontal field of views of the camera 3 are shown by dotted lines in figures 2a and 2b. As already described above, the camera 3 is kept stationary, while the cover 2 is rotated around the camera 3.

In figures 3a, 3b a schematic side view and a schematic top view of a cover 2′ and a camera 3′ according to another embodiment are shown. In the shown embodiment, the cover 2′ is essentially cylindrically, i.e. comprising a shape that is essentially convex or concave and could be chosen for enclosing a camera 3′ having a small aperture, such as for example a camera 3' for mirror replacement. The vertical and the horizontal field of views of the camera 3' are shown by dotted lines in figures 3a and 3b.

In figures 4 and 5 schematic cross-sectional views of covers 2ʺ, 2‴ and cameras 3ʺ, 3‴ according to further embodiments are shown. In figure 4, the camera 3" can be enclosed off-center in a donut like shaped cover 2ʺ having an essentially round cross section, where the cover 2ʺ can be rotated around an axis of rotation (shown by a dotted vertical line), while the camera 3ʺ is kept at a fixed position inside the cover 2ʺ. In figure 5, it is shown that the cover 2‴ can also have an essentially rectangular cross-section.

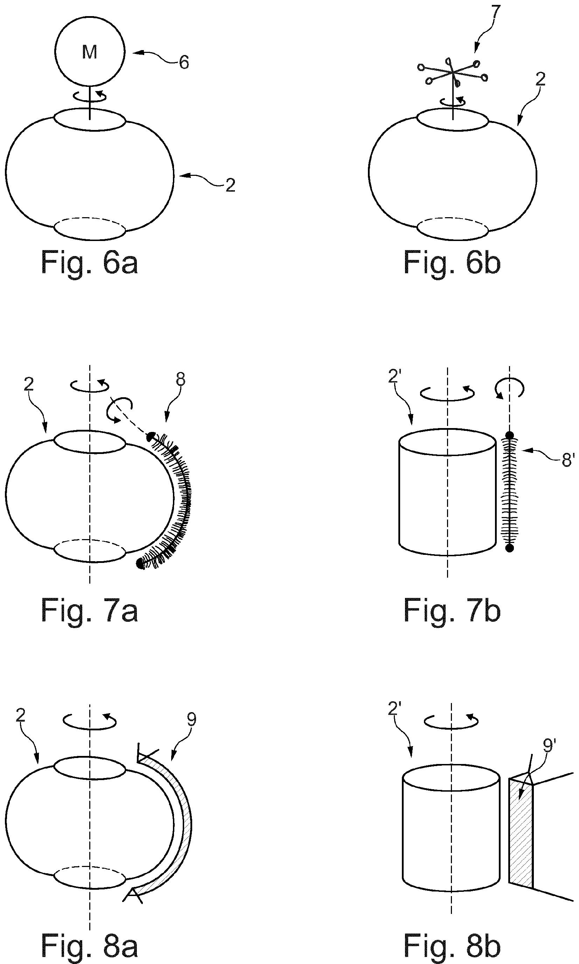

In figures 6a, 6b schematic views of a cover 2 and drive means according to embodiments are shown. For rotating the cover 2 relative to a camera (not shown in figures 6a, 6b), the cleaning system comprises drive means that could be, for example, located in the housing (not shown in figures 6a, 6b). In figure 6a it is shown that the drive means could comprise a motor 6, for example an electric motor, to rotate the cover 2. The skilled person would know that a shaft of the motor 6 could interact directly with the cover 2, or could interact with the cover 2 via a transmission (not shown in figures 6a, 6b). Figure 6b shows that the drive means could also comprise a turbine 7, for example a windmill, that rotates the cover 2 by means of an air stream, for example by an air stream that occurs when the vehicle is driven. However, the skilled person would know that the drive means could also comprise a motor 6 and a windmill 7.

In figures 7a and 7b schematic views of covers 2, 2′ and brushes 8, 8′ according to embodiments are shown. During operation, the brushes 8, 8' could be located in the housing (not shown in figures 7a and 7b) so that they are not visible from the outside of the housing, and do not obstruct the field of view of a camera that might be installed in the covers 2, 2′. In the embodiment that is shown in figure 7a, the brush 8 is installed essentially perpendicularly to the cover 2 and comprises a curvature that follows the curvature of the cover 2. The brush 8 might be also kept rotationally so that it can rotate in the opposite direction of the cover 2 when the cover 2 is rotated around the axis of ration that is shown by a dotted vertical line. In figure 7b an embodiment is shown where the brush 8′ is kept essentially parallel to an essentially cylindrical cover 2′. Also, the brush 8' that is shown in figure 7b could be kept rotational relative to the cover 2. The skilled person would, however, know that more than just one brush 8, 8′ could be used for cleaning the respective covers 2, 2′. Also, the brushes 8, 8' could be arranged essentially diagonally relative to the respective covers 2, 2′.

In figures 8a and 8b schematic views of covers 2, 2′ and lips 9, 9′ according to embodiments are shown. In the embodiment that is shown in figure 8a, the lip 9 comprises a curvature that follows the curvature of the cover 2 it is used with. Alternatively, a straight lip 9 could be also bent so that it follows the curvature of the cover 2. The lip 9 could essentially comprise a thin strip of rubber material that is suitable to remove liquid from the outer surface of the cover 2, when the cover 2 is rotated relative to the lip 9 around its rotational axis as shown in figure 8a by a vertical dotted line. Similar to the embodiments that are described above in regard to figures 7a and 7b, the lip could be located inside the housing, so that it is not visible from the outside and does not obstruct the field of view of a camera that might be installed in the cover 2. When not used for cleaning, the lip could be kept at a location slightly spaced from the cover 2 and pushed onto the cover 2 by appropriate means when cleaning of the cover 2 is desired. In figure 8b an embodiment is shown where the lip 9′ is kept essentially parallel to an essentially cylindrical cover 2′. Also, the skilled person would know that more than just one lip 9, 9' could be used for cleaning the respective covers 2, 2′. Also, the lips 9, 9′ could be arranged essentially diagonally relative to the covers 2, 2′.

Also, the skilled person would know that the embodiments which are shown in figures 7a, 7b, 8a, and 8b and described above could be operated in conjunction with at least one nozzle (not shown), wherein the nozzle could be adapted to spray a cleaning fluid, preferably water, onto the outer surface of the covers 2, 2′. In particular, the nozzle could be adapted to spray a cleaning fluid between the outer surface of the covers 2, 2′ and the brushes 8, 8′, and/or lips 9, 9′.

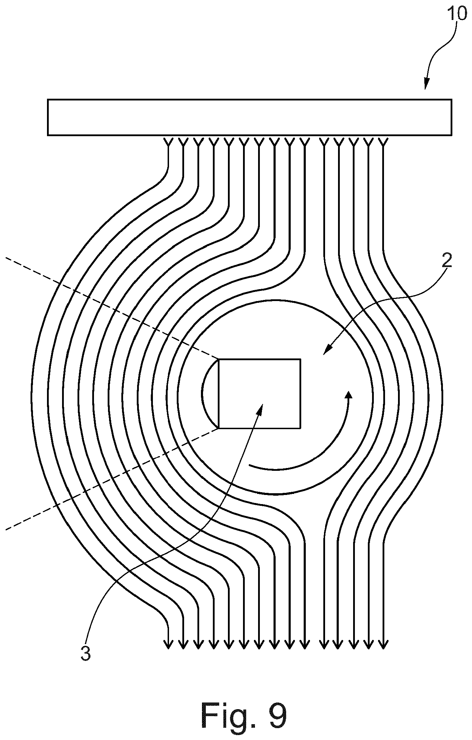

In figure 9 a schematic view of a camera 3 enclosed in a cover 2 and a fan 10 according to another embodiment are shown. As it can be seen in figure 9, the fan 10 could be located at a distance to the cover 2 for circulating air around the cover 2, when in operation. The skilled person would know that the fan 10 could be located at some place in, or at the housing (not shown). Alternatively, the fan 10 could be also located externally to the housing. The air stream that is generated by the fan 10 can create an air cushion on the cover 3, in particular in the field of view of the lens installed in the camera 3, to prevent spoiling of the cover 3. The skilled person would know that the fan 10 could comprise a turbine for generating the air stream artificially, or could alternatively comprise means for directing the air stream to the cover 3 that occurs when the vehicle is driving.

The features disclosed in the claims, the specification, and the drawings maybe essential for different embodiments of the claimed invention, both separately or in any combination with each other.

## Claims

1. rear view display device for a vehicle, comprising at least one cleaning system for a camera lens comprising:
a cover (2ʺ) to at least partially enclose at least one camera (3, 3′) having at least one camera lens;
drive means adapted to rotationally move the cover (2ʺ) relative to the cameras (3, 3′); and a housing (4′) adapted to hold the cover (2ʺ) and the drive means, wherein
the housing (4′) at least partially encloses the cover (2ʺ) and comprises at least one opening (5ʺ) for allowing electromagnetic radiation to pass through the cover (2ʺ) to the lens;
wherein there are two cameras, and
the two cameras (3, 3′) are enclosed in one single cover (2ʺ), with one single opening (5ʺ) being shaped so that it does not obstruct the viewing angle of either of the two camera (3, 3′), and the cover (2ʺ) being rotatable around two axes

2. A rear view display device for a vehicle, comprising at least one cleaning system (1, 1′) for a camera lens comprising:
a cover (2, 2′, 2ʺ, 2‴) adapted to at least partially enclose at least one camera (3, 3′, 3ʺ, 3‴) having at least one camera lens;
drive means adapted to rotationally move the cover (2, 2′, 2ʺ, 2‴) relative to the cameras (3, 3′, 3ʺ, 3‴); and
a housing (4) adapted to hold the cover (2, 2′, 2ʺ, 2‴) and the drive means, wherein the housing (4) at least partially encloses the cover (2, 2′, 2ʺ, 2‴) and comprises at least one opening (5, 5′) for allowing electromagnetic radiation to pass through the cover (2, 2′, 2ʺ, 2‴) to the lens;
wherein there are two cameras, and
an auxiliary cover (2, 2′, 2ʺ, 2‴) to at least partially enclose an auxiliary camera (3, 3′, 3", 3"') having at least one auxiliary camera lens, and auxiliary drive means adapted to rotationally move the auxiliary cover (2, 2', 2", 2"') relative to the auxiliary camera (3, 3′, 3ʺ, 3‴) are provided, wherein the housing (4) is adapted to hold the auxiliary cover (2, 2′, 2ʺ, 2‴) and the auxiliary drive means, wherein the housing (4) comprises an auxiliary opening (5') for allowing light to pass through the auxiliary cover (2, 2′, 2ʺ, 2‴) to the lens of the auxiliary camera (3, 3′, 3ʺ, 3‴), and wherein the auxiliary cover (2, 2′, 2ʺ, 2‴) is adapted to at least partially enclose a camera (3, 3′, 3ʺ, 3‴) having a wide aperture for surround view and the auxiliary cover (2, 2′, 2ʺ, 2‴) is adapted to at least partially enclose an auxiliary camera (3, 3′, 3ʺ, 3‴) having a narrow aperture for mirror replacement.

3. The rear view display device of any of the preceding claims **characterized in that** the cover (2, 2′, 2ʺ, 2‴) fully encloses the at least one camera (3, 3′, 3ʺ, 3‴), or the cover (2, 2′, 2ʺ, 2‴) encloses at least the lens of the at least one camera (3, 3′, 3ʺ, 3‴).

4. The rear view display device of claim 2, **characterized in that**
the cover (2, 2′, 2ʺ, 2‴) comprises a geometry that is essentially rotational symmetric, or
the cover (2, 2′, 2ʺ, 2‴) comprises a rectangular, cylindrical, spherical, conical, elliptical, and/or circular shape.

5. The rear view display device of claim 4, **characterized in that**
at least part of the cover (2, 2′, 2ʺ, 2‴) comprises a convex shape, or a concave shape, wherein at least that part of the cover (2, 2′, 2ʺ, 2‴) comprises a convex shape, or a concave shape that is adapted to be moved over the at least one camera (3, 3′, 3ʺ, 3‴) and/or the camera lens.

6. The rear view display device of any of the preceding claims, **characterized in that**
the drive means comprises a motor (6) to rotationally move the cover (2, 2′, 2ʺ, 2‴) relative to the at least one camera (3, 3′, 3ʺ, 3‴) by means of an air stream.

7. The rear view display device of any of the preceding claims, comprising
at least one cleaning device, wherein the cleaning device is adapted to clean an outer surface of the cover (2, 2′, 2ʺ, 2‴), and the cleaning device is installed essentially perpendicularly to the cover (2, 2′, 2ʺ, 2‴) and comprises a curvature that follows the curvature of the cover (2, 2′, 2ʺ, 2‴), or extends essentially along a straight line.

8. The rear view display device of claim 6, wherein
the cleaning device comprises at least one brush (8, 8′), for cleaning the outer surface of the cover (2, 2′, 2ʺ, 2‴), wherein the brush (8, 8′) is kept rotationally relative to the cover (2, 2′, 2ʺ, 2‴).

9. The rear view display device of any of claims 6 or 7, wherein
the cleaning device comprises at least one lip (9, 9′), for cleaning the outer surface of the cover (2, 2′, 2ʺ, 2‴).

10. The rear view display device of any of claims 6 to 8, comprising
at least one nozzle, wherein the nozzle is adapted to spray a cleaning fluid onto the outer surface of the cover (2, 2′, 2ʺ, 2‴), and/or
the nozzle is adapted to spray the cleaning fluid between the outer surface of the cover (2, 2′, 2ʺ, 2‴) and the cleaning device.

11. The rear view display device of any of the preceding claims, comprising at least one fan (10) for circulating air around the cover (2, 2′, 2ʺ, 2‴).

12. The rear view display device of any of the preceding claims, comprising at least one heating means in thermal contact with the cover (2, 2′, 2ʺ, 2‴).

13. The rear view display device of any of the preceding claims, wherein each housing (4, 4′) can be arranged on a vehicle, mounted to a side of the vehicle, at a location where traditionally a side view mirror would be mounted.

14. A vehicle, comprising at least one rear view display device according to any of the preceding claims.

15. The vehicle as claimed in claim 14, wherein
each camera of the rear view display device is adapted to take images from the vehicle's surrounding and to present the images to a driver inside the vehicle's cabin or to supply image information to computing device for further processing.

## Patentansprüche

1. Rückblickanzeigevorrichtung für ein Fahrzeug, umfassend zumindest ein Reinigungssystem (1′) für ein Kameraobjektiv, das umfasst:
eine Abdeckung (2ʺ), die dazu angepasst ist, zumindest eine Kamera (3, 3′) mit zumindest einem Kameraobjektiv zumindest teilweise zu umschließen;
ein Antriebsmittel, das dazu angepasst ist, die Abdeckung (2ʺ) relativ zu den Kameras (3, 3′) drehend zu bewegen; und
ein Gehäuse (4′), das dazu angepasst ist, die Abdeckung (2ʺ) und das Antriebsmittel zu halten, wobei
das Gehäuse (4′) die Abdeckung (2ʺ) zumindest teilweise umschließt und zumindest eine Öffnung (5ʺ) umfasst, die es ermöglicht, dass elektromagnetische Strahlung durch die Abdeckung (2ʺ) zum Objektiv gelangt;
wobei es zwei Kameras gibt und
die beiden Kameras (3, 3′) in einer einzigen Abdeckung (2ʺ) eingeschlossen sind, wobei eine einzige Öffnung (5ʺ) so geformt ist, dass sie den Blickwinkel keiner der beiden Kameras (3, 3′) behindert, und die Abdeckung (2ʺ) um zwei Achsen drehbar ist.

2. Rückblickanzeigevorrichtung für ein Fahrzeug, umfassend zumindest ein Reinigungssystem (1, 1′) für ein Kameraobjektiv, umfassend:
eine Abdeckung (2, 2′, 2ʺ, 2‴), die dazu angepasst ist, zumindest eine Kamera (3, 3′, 3ʺ, 3‴) mit zumindest einem Kameraobjektiv zumindest teilweise zu umschließen;
ein Antriebsmittel, das dazu angepasst ist, die Abdeckung (2, 2′, 2ʺ, 2‴) relativ zu den Kameras (3, 3′, 3ʺ, 3‴) drehend zu bewegen; und
ein Gehäuse (4), das dazu angepasst ist, die Abdeckung (2, 2′, 2ʺ, 2‴) und das Antriebsmittel zu halten,
wobei das Gehäuse (4) die Abdeckung (2, 2′, 2ʺ, 2‴) zumindest teilweise umschließt und zumindest eine Öffnung (5, 5′) umfasst, die es ermöglicht, dass elektromagnetische Strahlung durch die Abdeckung (2, 2′, 2ʺ, 2‴) zum Objektiv gelangt;
wobei es zwei Kameras gibt und
eine Hilfsabdeckung (2, 2′, 2ʺ, 2‴), die eine Hilfskamera (3, 3′, 3ʺ, 3‴) mit zumindest einem Hilfskameraobjektiv zumindest teilweise umschließt, und ein Hilfsantriebsmittel, das dazu angepasst ist, die Hilfsabdeckung (2, 2′, 2ʺ, 2‴) relativ zur Hilfskamera (3, 3′, 3ʺ, 3‴) drehend zu bewegen, bereitgestellt sind,
wobei das Gehäuse (4) dazu angepasst ist, die Hilfsabdeckung (2, 2′, 2ʺ, 2‴) und das Hilfsantriebsmittel zu halten,
wobei das Gehäuse (4) eine Hilfsöffnung (5′) umfasst, die es ermöglicht, dass Licht durch die Hilfsabdeckung (2, 2′, 2ʺ, 2‴) zum Objektiv der Hilfskamera (3, 3′, 3ʺ, 3‴) gelangt, und
wobei die Hilfsabdeckung (2, 2′, 2ʺ, 2‴) dazu angepasst ist, eine Kamera (3, 3′, 3ʺ, 3‴) mit einer großen Blende für eine Rundumsicht zumindest teilweise zu umschließen, und die Hilfsabdeckung (2, 2′, 2ʺ, 2‴) dazu angepasst ist, eine Hilfskamera (3, 3′, 3ʺ, 3‴) mit einer engen Blende als Spiegelersatz zumindest teilweise zu umschließen.

3. Rückblickanzeigevorrichtung nach einem der vorangehenden Ansprüche, **dadurch gekennzeichnet, dass** die Abdeckung (2, 2′, 2ʺ, 2‴) die zumindest eine Kamera (3, 3′, 3ʺ, 3‴) vollständig umschließt oder dass die Abdeckung (2, 2′, 2ʺ, 2‴) zumindest das Objektiv der zumindest einen Kamera (3, 3′, 3ʺ, 3‴) umschließt.

4. Rückblickanzeigevorrichtung nach Anspruch 2, **dadurch gekennzeichnet, dass**
die Abdeckung (2, 2′, 2ʺ, 2‴) eine Geometrie umfasst, die im Wesentlichen rotationssymmetrisch ist, oder
die Abdeckung (2, 2′, 2ʺ, 2‴) eine rechteckige, zylindrische, kugelförmige, konische, elliptische und/oder kreisrunde Form aufweist.

5. Rückblickanzeigevorrichtung nach Anspruch 4, **dadurch gekennzeichnet, dass**
zumindest ein Teil der Abdeckung (2, 2′, 2ʺ, 2‴) eine konvexe Form oder eine konkave Form umfasst,
wobei zumindest der Teil der Abdeckung (2, 2′, 2ʺ,2‴) eine konvexe Form oder eine konkave Form umfasst, die dazu angepasst ist, über die zumindest eine Kamera (3, 3′, 3ʺ, 3‴) und/oder das Kameraobjektiv bewegt zu werden.

6. Rückblickanzeigevorrichtung nach einem der vorangehenden Ansprüche, **dadurch gekennzeichnet, dass**
das Antriebsmittel einen Motor (6) umfasst, um die Abdeckung (2, 2′, 2ʺ, 2‴) mittels eines Luftstroms relativ zu der zumindest einen Kamera (3, 3′, 3ʺ, 3‴) drehend zu bewegen.

7. Rückblickanzeigevorrichtung nach einem der vorangehenden Ansprüche, umfassend
zumindest eine Reinigungsvorrichtung, wobei die Reinigungsvorrichtung dazu angepasst ist, eine Außenfläche der Abdeckung (2, 2′, 2ʺ, 2‴) zu reinigen, und die Reinigungsvorrichtung im Wesentlichen senkrecht zur Abdeckung (2, 2′, 2ʺ, 2‴) installiert ist und eine Krümmung umfasst, die der Krümmung der Abdeckung (2, 2′, 2ʺ, 2‴) folgt oder sich im Wesentlichen entlang einer geraden Linie erstreckt.

8. Rückblickanzeigevorrichtung nach Anspruch 6, wobei
die Reinigungsvorrichtung zumindest eine Bürste (8, 8′) zum Reinigen der Außenfläche der Abdeckung (2, 2′, 2ʺ, 2‴) umfasst, wobei die Bürste (8, 8′) relativ zur Abdeckung (2, 2′, 2ʺ, 2‴) drehbar gehalten wird.

9. Rückblickanzeigevorrichtung nach einem der Ansprüche 6 oder 7, wobei
die Reinigungsvorrichtung zumindest eine Lippe (9, 9') zum Reinigen der Außenfläche der Abdeckung (2, 2′, 2ʺ, 2‴) umfasst.

10. Rückblickanzeigevorrichtung nach einem der Ansprüche 6 bis 8, umfassend zumindest eine Düse, wobei
die Düse dazu angepasst ist, ein Reinigungsfluid auf die Außenfläche der Abdeckung (2, 2′, 2ʺ, 2‴) zu sprühen, und/oder
die Düse dazu angepasst ist, das Reinigungsfluid zwischen die Außenfläche der Abdeckung (2, 2′, 2ʺ, 2‴) und die Reinigungsvorrichtung zu sprühen.

11. Rückblickanzeigevorrichtung nach einem der vorangehenden Ansprüche, umfassend zumindest ein Gebläse (10) zum Umwälzen von Luft um die Abdeckung (2, 2′, 2ʺ, 2‴).

12. Rückblickanzeigevorrichtung nach einem der vorangehenden Ansprüche, umfassend zumindest ein Heizmittel, das mit der Abdeckung (2, 2′, 2ʺ, 2‴) in thermischem Kontakt steht.

13. Rückblickanzeigevorrichtung nach einem der vorangehenden Ansprüche, wobei jedes Gehäuse (4, 4') an einem Fahrzeug angeordnet sein kann, angebracht auf einer Seite des Fahrzeugs an einer Position, an der üblicherweise der Seitenspiegel angebracht wäre.

14. Fahrzeug, umfassend zumindest eine Rückblickanzeigevorrichtung nach einem der vorangehenden Ansprüche.

15. Fahrzeug nach Anspruch 14, wobei
jede Kamera der Rückblickanzeigevorrichtung dazu angepasst ist, Bilder der Fahrzeugumgebung aufzunehmen und die Bilder einem Fahrer im Fahrzeuginnenraum zu zeigen oder Bildinformationen an eine Rechenvorrichtung zur weiteren Verarbeitung zu liefern.

## Revendications

1. Dispositif d'affichage de vue arrière pour un véhicule, comprenant au moins un système de nettoyage (1′) pour un objectif de caméra, comprenant :
un couvercle (2ʺ) adapté pour enfermer au moins partiellement au moins une caméra (3, 3′) ayant au moins un objectif de caméra ;
des moyens d'entraînement adaptés pour déplacer en rotation le couvercle (2ʺ) par rapport aux caméras (3, 3′) ; et
un boîtier (4′) adapté pour contenir le couvercle (2ʺ) et les moyens d'entraînement, dans lequel
le boîtier (4′) enferme au moins partiellement le couvercle (2ʺ) et comprend au moins une ouverture (5ʺ) pour permettre à un rayonnement électromagnétique de passer à travers le couvercle (2ʺ) vers l'objectif ;
dans lequel il y a deux caméras, et
les deux caméras (3, 3′) sont enfermées dans un seul couvercle (2ʺ), une seule ouverture (5ʺ) étant formée de manière à ne pas obstruer l'angle de vue de l'une ou l'autre des deux caméras (3, 3′), et le couvercle (2ʺ) pouvant tourner autour de deux axes.

2. Dispositif d'affichage de vue arrière pour un véhicule, comprenant au moins un système de nettoyage (1, 1′) pour un objectif de caméra, comprenant :
un couvercle (2, 2′, 2ʺ, 2‴) adapté pour enfermer au moins partiellement au moins une caméra (3, 3′, 3ʺ, 3‴) ayant au moins un objectif de caméra ;
des moyens d'entraînement adaptés pour déplacer en rotation le couvercle (2, 2', 2ʺ, 2‴) par rapport aux caméras (3, 3′, 3ʺ, 3‴) ; et
un boîtier (4) adapté pour contenir le couvercle (2, 2′, 2ʺ, 2‴) et les moyens d'entraînement, dans lequel
le boîtier (4) enferme au moins partiellement le couvercle (2, 2′, 2ʺ, 2‴) et comprend au moins une ouverture (5, 5′) pour permettre à un rayonnement électromagnétique de passer à travers le couvercle (2, 2′, 2ʺ, 2‴) vers l'objectif;
dans lequel il y a deux caméras, et
un couvercle auxiliaire (2, 2′, 2ʺ, 2‴) pour enfermer au moins partiellement une caméra auxiliaire (3, 3′, 3ʺ, 3‴) ayant au moins un objectif de caméra auxiliaire, et des moyens d'entraînement auxiliaires adaptés pour déplacer en rotation le couvercle auxiliaire (2, 2′, 2ʺ, 2‴) par rapport à la caméra auxiliaire (3, 3′, 3ʺ, 3‴) sont prévus, dans lequel le boîtier (4) est adapté pour contenir le couvercle auxiliaire (2, 2′, 2ʺ, 2‴) et les moyens d'entraînement auxiliaires, dans lequel le boîtier (4) comprend une ouverture auxiliaire (5′) pour permettre à de la lumière de passer à travers le couvercle auxiliaire (2, 2′, 2ʺ, 2‴) vers l'objectif de la caméra auxiliaire (3, 3′, 3ʺ, 3‴), et dans lequel le couvercle auxiliaire (2, 2′, 2ʺ, 2‴) est adapté pour enfermer au moins partiellement une caméra (3, 3′, 3ʺ, 3‴) ayant une ouverture large pour une vue d'ensemble et le couvercle auxiliaire (2, 2′, 2ʺ, 2‴) est adapté pour enfermer au moins partiellement une caméra auxiliaire (3, 3′, 3ʺ, 3‴) ayant une ouverture étroite pour remplacer un miroir.

3. Dispositif d'affichage de vue arrière selon l'une quelconque des revendications précédentes, **caractérisé en ce que** le couvercle (2, 2′, 2ʺ, 2‴) enferme entièrement l'au moins une caméra (3, 3′, 3ʺ, 3‴), ou le couvercle (2, 2′, 2ʺ, 2‴) enferme au moins l'objectif de l'au moins une caméra (3, 3′, 3′, 3‴).

4. Dispositif d'affichage de vue arrière selon la revendication 2, **caractérisé en ce que**
le couvercle (2, 2′, 2ʺ, 2‴) comprend une géométrie qui est essentiellement symétrique en rotation, ou
le couvercle (2, 2′, 2ʺ, 2‴) comprend une forme rectangulaire, cylindrique, sphérique, conique, elliptique et/ou circulaire.

5. Dispositif d'affichage de vue arrière selon la revendication 4, **caractérisé en ce que**
au moins une partie du couvercle (2, 2′, 2ʺ, 2‴) comprend une forme convexe ou une forme concave, dans lequel au moins cette partie du couvercle (2, 2′, 2ʺ, 2‴) comprend une forme convexe ou une forme concave qui est adaptée pour être déplacée sur l'au moins une caméra (3, 3′, 3ʺ, 3‴) et/ou l'objectif de la caméra.

6. Dispositif d'affichage de vue arrière selon l'une quelconque des revendications précédentes, **caractérisé en ce que**
le moyen d'entraînement comprend un moteur (6) pour déplacer en rotation le couvercle (2, 2′, 2ʺ, 2‴) par rapport à l'au moins une caméra (3, 3′, 3ʺ, 3‴) au moyen d'un courant d'air.

7. Dispositif d'affichage de vue arrière selon l'une quelconque des revendications précédentes, comprenant
au moins un dispositif de nettoyage, dans lequel le dispositif de nettoyage est adapté pour nettoyer une surface extérieure du couvercle (2, 2′, 2ʺ, 2‴), et le dispositif de nettoyage est installé essentiellement perpendiculairement au couvercle (2, 2′, 2ʺ, 2‴) et comprend une courbure qui suit la courbure du couvercle (2, 2′, 2ʺ, 2‴), ou s'étend essentiellement le long d'une ligne droite.

8. Dispositif d'affichage de vue arrière selon la revendication 6, dans lequel
le dispositif de nettoyage comprend au moins une brosse (8, 8′), pour nettoyer la surface extérieure du couvercle (2, 2′, 2ʺ, 2‴), dans lequel la brosse (8, 8′) est maintenue en rotation par rapport au couvercle (2, 2′, 2ʺ, 2‴).

9. Dispositif d'affichage de vue arrière selon l'une quelconque des revendications 6 ou 7, dans lequel
le dispositif de nettoyage comprend au moins une lèvre (9, 9'), pour nettoyer la surface extérieure du couvercle (2, 2′, 2ʺ, 2‴).

10. Dispositif d'affichage de vue arrière selon l'une quelconque des revendications 6 à 8, comprenant
au moins une buse, dans lequel la buse est adaptée pour pulvériser un fluide de nettoyage sur la surface extérieure du couvercle (2, 2′, 2ʺ, 2‴), et/ou
la buse est adaptée pour pulvériser le fluide de nettoyage entre la surface extérieure du couvercle (2, 2′, 2ʺ, 2‴) et le dispositif de nettoyage.

11. Dispositif d'affichage de vue arrière selon l'une quelconque des revendications précédentes, comprenant au moins un ventilateur (10) pour faire circuler de l'air autour du couvercle (2, 2′, 2ʺ, 2‴).

12. Dispositif d'affichage de vue arrière selon l'une quelconque des revendications précédentes, comprenant au moins un moyen de chauffage en contact thermique avec le couvercle (2, 2′, 2ʺ, 2‴).

13. Dispositif d'affichage de vue arrière selon l'une quelconque des revendications précédentes, dans lequel chaque boîtier (4, 4′) peut être agencé sur un véhicule, monté sur un côté du véhicule, à un endroit où traditionnellement un rétroviseur latéral serait monté.

14. Véhicule, comprenant au moins un dispositif d'affichage de vue arrière selon l'une quelconque des revendications précédentes.

15. Véhicule selon la revendication 14, dans lequel
chaque caméra du dispositif d'affichage de vue arrière est adaptée pour prendre des images de l'environnement du véhicule et pour présenter les images à un conducteur à l'intérieur de l'habitacle du véhicule ou pour fournir des informations d'images à un dispositif informatique pour un traitement ultérieur.
